# DEMANDE DE BREVET EUROPEEN

(11) **EP 1 710 141 A1**
(43) Date de publication de la demande: **11.10.2006**
(21) Numéro de dépôt: 06300216.6
(22) Date de dépôt: 10.03.2006
(51) Int. Cl.: B60S 1/34

(54) **Axe d'articulation à géométrie variable**

(30) Priorité: 07.04.2005 FR 0550890
(71) Demandeur: Renault SAS, 92100 Boulogne Billancourt (FR)
(72) Inventeur: Monteil, Michel, 78870 BAILLY (FR)

(57) **Abrégé**

Essuie-vitre dont un bras (3) est lié à un balai d'essuie-vitre (2) comportant, en particulier, une lame d'essuyage, une extrémité dudit bras d'essuie-vitre (3) étant montée sur une extrémité d'un axe de liaison (6), dans lequel l'extrémité opposée dudit axe de liaison (6) est solidaire d'un levier pivotant (7) lui-même relié à un moteur d'entraînement (5), dans lequel ledit axe de liaison (6) est inséré, de manière à le traverser, dans un manchon creux (8), ledit axe de liaison (6) étant sensiblement incliné par rapport à l'axe de révolution (Z) dudit manchon creux (8) de manière à former avec celui-ci un angle (α) non nul et inférieur à 90°, caractérisé en ce qu'il inclut des moyens appropriés aptes à :
- induire le pivotement dudit bras (3) autour de l'axe dudit moteur d'entraînement (5), pour essuyer une première zone (A), d'une cambrure donnée, de ladite surface à essuyer (1), d'une part, et à,
- induire le pivotement dudit bras (3) autour dudit axe de liaison (6) pour essuyer une deuxième zone (B), de cambrure sensiblement différente de ladite cambrure de ladite zone (A), de ladite surface à essuyer (1), d'autre part.

## Description

La présente invention se rapporte au domaine des essuie-vitres de véhicules automobiles.

Les essuie-vitres conventionnels sont, en effet, peu adaptés à l'essuyage de surfaces vitrées telles que celles des pare-brise panoramiques, de plus en plus répandus sur les véhicules automobiles, les forts galbes et les profils de ces pare-brise induisant de fortes variations de l'angle d'incidence du balai d'essuie-vitre par rapport à la surface essuyée. Les essuie-vitres conventionnels étant conçus pour des surfaces dont la courbure moyenne varie peu, il s'en suit, lorsque le rayon de courbure de ladite surface à essuyer présente de fortes ou brusques variations, des phénomènes préjudiciables à l'efficacité de l'essuyage ainsi qu'au confort de la conduite : vibrations, retournements intempestifs de la lame du balai d'essuie-vitre, broutements, bruits gênants, etc ...

De nombreuses solutions ont été étudiées pour pallier ces inconvénients et proposer des essuie-vitres adaptés à l'essuyage de surfaces fortement galbées ou dont le rayon de courbure présente de brusques ou importantes variations, qu'il s'agisse de solutions visant à améliorer la souplesse et l'adaptabilité du balai d'essuie-vitre et de la lame d'essuyage aux variations de rayon de courbure de la surface à essuyer, ou qu'il s'agisse de solutions visant à optimiser le contact, au cours de l'essuyage, dudit balai d'essuie-vitre avec ladite surface à essuyer. Les systèmes proposés dans ce dernier cas visent principalement le mode d'articulation du bras supportant le balai d'essuie-vitre et tendent à proposer des dispositifs permettant d'adapter l'inclinaison dudit bras par rapport à la surface à essuyer ainsi que la pression transmise par ledit bras audit balai d'essuie-vitre, dispositifs faisant généralement intervenir des ensembles plus ou moins complexes d'engrenages.

Le document EP0149338 présente ainsi un système de liaison d'un bras d'essuie-vitre dans lequel une extrémité dudit bras d'essuie-vitre est montée sur un axe qui lui est, en position de repos, sensiblement perpendiculaire, ladite extrémité dudit bras d'essuie-vitre étant liée, au moyen d'un ensemble complexe d'engrenages non circulaires et d'axes secondaires, à un arbre de sortie d'un moteur d'entraînement, les parcours et les rapports respectifs desdits engrenages (dont une part présente des rapports fixes et une part présente des rapports variables) permettant de faire varier les angles de balayage et vitesses angulaires dudit bras et du balai d'essuie-vitre entre différentes valeurs. Un tel système comporte toutefois un nombre important de pièces et s'avère relativement encombrant et complexe à réaliser.

De manière analogue mais simplifiée, le document FR2740749 présente un système d'essuie-vitre destiné à l'essuyage de la vitre arrière d'un véhicule automobile, comportant, classiquement, un balai d'essuie-vitre dont une extrémité est liée à un bras, lui-même monté sur un axe approprié, ledit axe étant lié à un ensemble d'entraînement solidaire d'un moteur permettant les déplacements dudit balai d'essuie-vitre sur la surface à essuyer, et dans lequel une roue dentée ellipsoïdale, montée sur l'arbre de sortie dudit ensemble d'entraînement, coopère avec un pignon denté porté par ledit axe pour permettre l'inclinaison variable dudit axe par rapport à ladite surface à essuyer et induire un plaquage uniforme dudit balai d'essuie-vitre sur ladite surface à essuyer : un ressort de rappel lie, en outre, ledit axe audit arbre de sortie dudit ensemble d'entraînement, afin de maintenir le contact entre lesdites roue dentée et pignon.

La fiabilité d'un tel dispositif, toutefois, est principalement liée aux propriétés dudit ressort de rappel, et peut être remise en cause, par exemple si un effort important doit être fourni pour l'essuyage (présence de neige, par exemple, ou lors de périodes de gel). De plus, un tel dispositif semble difficilement transposable à un essuie-vitre destiné à l'essuyage d'une surface de grande dimension.

Une solution différente est proposée par le document US5186064. Dans ce dispositif, l'axe de liaison du bras d'un balai d'essuie-vitre est inséré, de manière à sensiblement le traverser, dans un premier élément approprié, ledit axe de liaison étant sensiblement incliné par rapport à l'axe de révolution dudit premier élément approprié, et libre en rotation par rapport audit premier élément approprié. A son extrémité opposée à l'extrémité liée audit bras d'essuie-vitre, ledit axe de liaison dudit bras d'essuie-vitre est également articulé sur un premier levier pivotant, lui-même articulé, à son extrémité opposée à l'extrémité liée audit axe de liaison, sur une tige de liaison liée à un arbre de sortie d'un moteur d'entraînement. Par ailleurs, à son extrémité opposée à l'extrémité dudit axe de liaison liée avec ledit bras d'essuie-vitre, la surface extérieure dudit premier élément approprié forme sensiblement une première roue dentée. Ledit premier levier pivotant est, en outre, également lié, par une articulation appropriée placée entre ses deux extrémités, à un second levier lui-même solidaire d'un axe secondaire inséré coaxialement dans un second élément approprié dont la surface extérieure forme sensiblement une seconde roue dentée destinée à coopérer avec ladite première roue dentée dudit premier élément approprié précédemment cité. Lorsque ledit moteur d'entraînement est actionné, ledit premier levier est entraîné, par ladite tige de liaison, à pivoter, entraînant ainsi également ledit second levier à pivoter, ladite seconde roue dentée dudit second élément approprié étant alors entraînée en rotation. Ladite seconde roue dentée coopérant avec ladite première roue dentée, il s'en suit que ledit premier élément approprié est entraîné en rotation à son tour. Dans le même temps, ledit premier levier pivotant entraîne également la rotation dudit axe de liaison dudit bras d'essuie-vitre auquel une de ses extrémités est liée. Ledit axe de liaison étant sensiblement incliné par rapport audit axe de révolution dudit premier élément approprié, et ledit premier élément approprié étant entraîné en rotation indépendamment, et en sens inverse, dudit axe de liaison par ledit système de leviers articulés et de roues dentées précédemment décrit, il s'en suit une variation possible de l'angle d'inclinaison dudit bras d'essuie-vitre (dans une plage préalablement déterminée par la géométrie du dispositif), et, par là, la possibilité de modifier l'angle d'attaque dudit balai d'essuie-vitre sur la surface à essuyer.

Un tel dispositif est toutefois, là encore, encombrant et, du fait du nombre de pièces qu'il comporte, relativement complexe et coûteux à réaliser.

La présente invention a pour but de proposer un bras d'essuie-vitre d'inclinaison variable, autorisant l'essuyage de surfaces dont le rayon de courbure peut varier subitement ou fortement, et dont le dispositif d'inclinaison soit simple, de réalisation peu coûteuse, et s'affranchissant de tout système d'engrenage.

L'invention a ainsi pour objet un essuie-vitre dont un bras est lié à un balai d'essuie-vitre comportant, en particulier, une lame d'essuyage, une extrémité dudit bras d'essuie-vitre étant montée sur une extrémité d'un axe de liaison, dans lequel l'extrémité opposée dudit axe de liaison est solidaire d'un levier pivotant lui-même relié à un moteur d'entraînement, dans lequel ledit axe de liaison est inséré, de manière à le traverser, dans un manchon creux, ledit axe de liaison étant sensiblement incliné par rapport à l'axe de révolution dudit manchon creux de manière à former avec celui-ci un angle non nul et inférieur à 90°, caractérisé en ce qu'il inclut des moyens appropriés aptes à :
- induire le pivotement dudit bras autour de l'axe dudit moteur d'entraînement, pour essuyer une première zone, d'une cambrure donnée, de ladite surface à essuyer, d'une part, et à,
- induire le pivotement dudit bras autour dudit axe de liaison pour essuyer une deuxième zone, de cambrure sensiblement différente de ladite cambrure de ladite zone, de ladite surface à essuyer, d'autre part.
Avantageusement, lesdits moyens appropriés comportent un ressort précontraint reliant entre eux ledit axe de liaison et ledit manchon creux, ainsi que, à la périphérie dudit manchon creux, un appendice destiné à coopérer avec une butée fixe placée à son voisinage, et, sur toute la longueur dudit manchon creux, une échancrure appropriée dont l'ouverture angulaire correspond au débattement angulaire dudit balai d'essuie-vitre lors de l'essuyage de ladite deuxième zone de ladite surface à essuyer.

Dans un mode de réalisation préféré de l'invention, l'une des extrémités dudit ressort approprié précontraint est liée audit appendice dudit manchon creux et l'autre extrémité dudit ressort approprié précontraint est liée audit levier pivotant.

Avantageusement, l'invention peut également présenter une ou plusieurs des caractéristiques suivantes :
- le parcours angulaire dudit manchon creux entre sa position initiale de repos et sa position dans laquelle ledit appendice placé à sa périphérie coopère avec ladite butée fixe correspond au débattement angulaire dudit balai d'essuie-vitre entre sa position initiale et sa position finale lors de l'essuyage de ladite première zone d'une cambrure donnée d'une surface à essuyer,
- ledit appendice dudit manchon creux atteint ladite butée fixe lorsque ledit balai d'essuie-vitre atteint la position de passage entre lesdites zones de cambrures sensiblement différentes de ladite zone à essuyer,
- la raideur dudit ressort approprié précontraint est telle que, lors de l'essuyage de ladite première zone de ladite surface à essuyer, la rotation dudit manchon creux et le mouvement dudit levier pivotant entraînant la rotation dudit axe de liaison et celle dudit bras d'essuie-vitre se font sans déformation dudit ressort approprié précontraint.

D'autres caractéristiques et avantages de l'invention ressortiront à la lecture de la description qui suit, en référence aux dessins annexés dans lesquels :
- la figure 1 est une vue schématique des différentes zones d'essuyage d'un pare-brise d'un véhicule automobile et d'un essuie-vitre selon l'invention,
- la figure 2 est une vue schématique en perspective du dispositif d'articulation d'un bras d'essuie-vitre selon l'invention,
- la figure 3 est une vue schématique en coupe, selon un plan perpendiculaire à l'axe de révolution dudit manchon principal creux, du dispositif d'articulation d'un bras d'essuie-vitre selon l'invention, au repos,
- la figure 4 est une vue schématique en coupe, selon un plan perpendiculaire à l'axe de révolution dudit manchon creux, du dispositif d'articulation d'un bras d'essuie-vitre selon l'invention, dans une position d'essuyage de la zone à essuyer,
- la figure 5 est une vue schématique des différentes zones d'essuyage d'un pare-brise d'un véhicule automobile et d'un essuie-vitre selon l'invention, dans le cas d'un système d'essuie-vitre à parallélogramme.

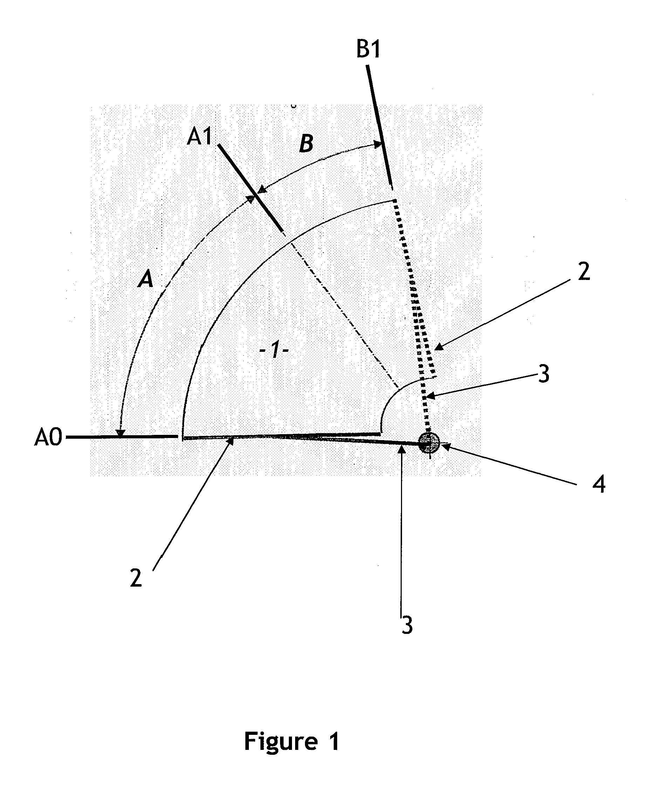

La figure 1 présente schématiquement deux zones A et B, de cambrures sensiblement différentes, d'une surface à essuyer 1, parcourues, lors de l'essuyage, par un balai d'essuie-vitre 2 équipé d'une lame d'essuyage non détaillée sur la figure 1, ledit balai d'essuie-vitre 2 étant lié à un bras d'essuie-vitre 3 lui transmettant, par l'intermédiaire d'un dispositif approprié 4, les mouvements d'un moteur d'entraînement 5.

A titre d'exemple non limitatif, et pour plus de clarté dans la description qui suit, on considèrera que ladite première zone A est une zone de faible cambrure de ladite surface à essuyer 1, et que ladite deuxième zone B est une zone de plus forte cambrure de ladite surface à essuyer 1 : ladite description et l'invention s'appliquent néanmoins quelles que soient les cambrures relatives desdites première et deuxième zones A et B, et, en particulier, si la zone de plus forte cambrure est ladite zone A.

De même, pour plus de clarté dans la description qui suit, on notera, respectivement : A0 la position initiale dudit balai d'essuie-vitre 2 lorsqu'il aborde ladite première zone A de faible cambrure de ladite surface 1 à essuyer ; A1, la position dudit balai d'essuie-vitre 2 au passage de ladite première zone A à ladite deuxième zone B de plus forte cambrure de ladite surface à essuyer 1 ; et B1, la position dudit balai d'essuie-vitre 2 lorsqu'il quitte ladite deuxième zone B de plus forte cambrure de ladite surface à essuyer 1.

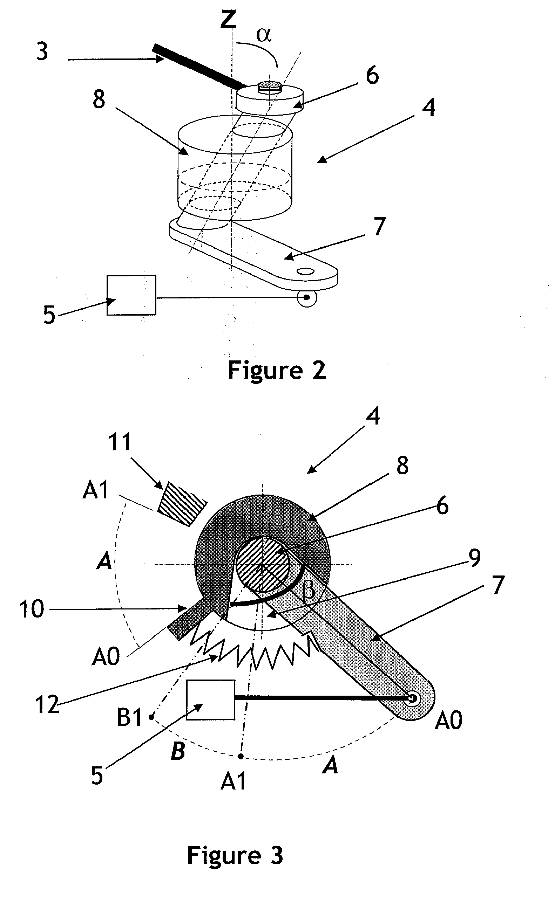

Les figures 2 et 3 présentent de manière plus détaillée ledit dispositif approprié 4.

Ledit bras d'essuie-vitre 3 est lié, à l'une de ses extrémités, à une extrémité d'un axe de liaison 6, ledit axe de liaison 6 étant, à son extrémité opposée, lié à une extrémité d'un levier pivotant 7. A son extrémité opposée, ledit levier pivotant 7 est, par ailleurs, lié, par un système approprié (non détaillé sur les figures), audit moteur d'entraînement 5.

Ledit axe de liaison 6 est inséré dans un manchon creux 8, sensiblement de manière à traverser ledit manchon creux 8, et de manière à former, avec l'axe de révolution Z dudit manchon creux 8, un angle α non nul et inférieur à 90° (positif ou négatif).

Dans l'essuie-vitre selon l'invention, ledit dispositif approprié 4 comporte, plus particulièrement, un ensemble de moyens appropriés aptes à permettre audit balai d'essuie-vitre 2 de suivre de manière optimale, lors de l'essuyage de ladite surface à essuyer 1, les variations de cambrure entre lesdites première et deuxième zone A et B de ladite surface à essuyer 1 : ces moyens appropriés vont maintenant être décrits de manière plus détaillée.

Ainsi que le montre plus précisément la figure 3, dans l'essuie-vitre selon l'invention, ledit manchon creux 8 présente, sur toute sa longueur, une échancrure 9 de forme appropriée autorisant une certaine liberté de mouvement dudit axe de liaison 6 au sein dudit manchon creux 8. Ladite échancrure 9 est dimensionnée de telle sorte que son ouverture angulaire β correspond au secteur angulaire balayé par ledit balai d'essuie-vitre 2 entre lesdites positions respectives A1 et B1 précédemment définies. Ledit manchon creux 8 comporte en outre, à sa périphérie, un appendice 10 destiné à coopérer avec une butée fixe 11 placée à son voisinage : ladite butée fixe 11 est disposée de telle sorte que le secteur angulaire balayé par ledit appendice 10 entre sa position initiale et sa position dans laquelle il coopère avec ladite butée fixe 11 correspond au secteur angulaire balayé par ledit balai d'essuie-vitre 2 entre sa position initiale A0 et ladite position A1 respectivement définies précédemment.

De plus, dans l'essuie-vitre selon l'invention, un ressort 12, précontraint, est placé entre ledit manchon creux 8 et ledit levier pivotant 7. Avantageusement, mais de manière non limitative, l'une des extrémités dudit ressort 12 est sensiblement fixée, par des moyens appropriés non représentés sur la figure, audit appendice 10 dudit manchon creux 8, l'autre extrémité dudit ressort 12 étant fixée, par des moyens appropriés non représentés sur la figure 3, audit levier pivotant 7.

Lorsque ledit moteur d'entraînement 5 commande le déplacement dudit balai d'essuie-vitre 2 au sein de la zone comprise entre lesdites positions A0 et A1 de ladite zone à essuyer 1, ledit levier pivotant 7 est mis en mouvement. Ledit axe de liaison 6 est alors également mis en mouvement et, la raideur et la précontrainte dudit ressort 12 étant définies de manière appropriée au regard du couple transmis par ledit moteur d'entraînement 5 et de l'effort exercé par lesdits balai et bras d'essuie-vitre 2 et 3, entraîne à son tour, par l'intermédiaire dudit ressort 12 et sans déformation de celui-ci, la rotation dudit manchon creux 8 autour de son axe de révolution Z. Il en résulte que la rotation dudit bras d'essuie-vitre 3 se produit alors autour dudit axe Z de révolution dudit manchon creux 8.

Lorsque ledit balai d'essuie-vitre 2 atteint ladite position A1 de passage à ladite zone B de plus forte cambrure de ladite surface à essuyer 1, ledit appendice 10 dudit manchon creux 8 atteint ladite butée fixe 11, ainsi qu'il a été précédemment indiqué. Ledit manchon creux 8 est alors immobilisé en rotation, alors que le mouvement dudit axe de liaison 6 se poursuit, sous l'effet dudit levier pivotant 7 commandé par ledit moteur d'entraînement 5, et grâce à la compression dudit ressort 12. Ledit axe de liaison 6, incliné par rapport audit axe de révolution Z dudit manchon creux 8, se déplace alors au sein de ladite échancrure 9, conduisant ledit levier pivotant 7 à balayer ledit secteur angulaire β correspondant au secteur angulaire balayé par ledit balai d'essuie-vitre 2 lors de l'essuyage de ladite zone B de ladite surface à essuyer 1. Dans ce cas, la rotation dudit bras d'essuie-vitre 3 se produit alors autour dudit axe de liaison 6, dont l'inclinaison α, variable par rapport audit axe de révolution Z dudit manchon creux 8 au travers dudit déplacement dudit axe de liaison 6 au sein de ladite échancrure 9, conduit à une modification continue de l'angle d'inclinaison dudit bras d'essuie-vitre par rapport à ladite surface à essuyer 1.

Lorsque ledit balai d'essuie-vitre 2 a atteint ladite position B1 précédemment définie et revient à sa position initiale A0, la succession inverse de mouvements se produit, c'est-à-dire, respectivement :
- décompression dudit ressort 12, déplacement dudit axe de liaison 6 au sein de ladite échancrure 9 dudit manchon creux 8, et rotation dudit bras d'essuie-vitre 3 autour dudit axe de liaison 6 lors du balayage, par ledit balai d'essuie-vitre 2, de ladite zone B de ladite surface à essuyer 1, entre lesdites positions B1 et A1,
- déblocage dudit appendice 10 de ladite butée 11 lors du passage dudit balai d'essuie-vitre 2 dans ladite position A1,
- rotation dudit bras d'essuie-vitre 3 autour de l'axe de révolution Z dudit manchon creux 8 lors du balayage, par ledit balai d'essuie-vitre 2, de ladite zone A de ladite surface à essuyer 1, entre lesdites positions A1 et A0.

L'invention permet ainsi de réaliser une inclinaison continûment variable dudit bras d'essuie-vitre 3 par rapport à ladite surface à essuyer 1, rendant ainsi possible l'essuyage de surfaces de forte cambrure ou dont le rayon de courbure subit de fortes ou brusques variations. Elle permet ainsi également d'améliorer, dans ce cas, l'angle d'attaque de la lame d'essuyage sur ladite surface à essuyer.

Il est à noter que l'invention peut être mise en oeuvre pour tout type d'essuie-vitre, qu'il s'agisse de systèmes antagonistes à deux bras ou de systèmes parallèles.

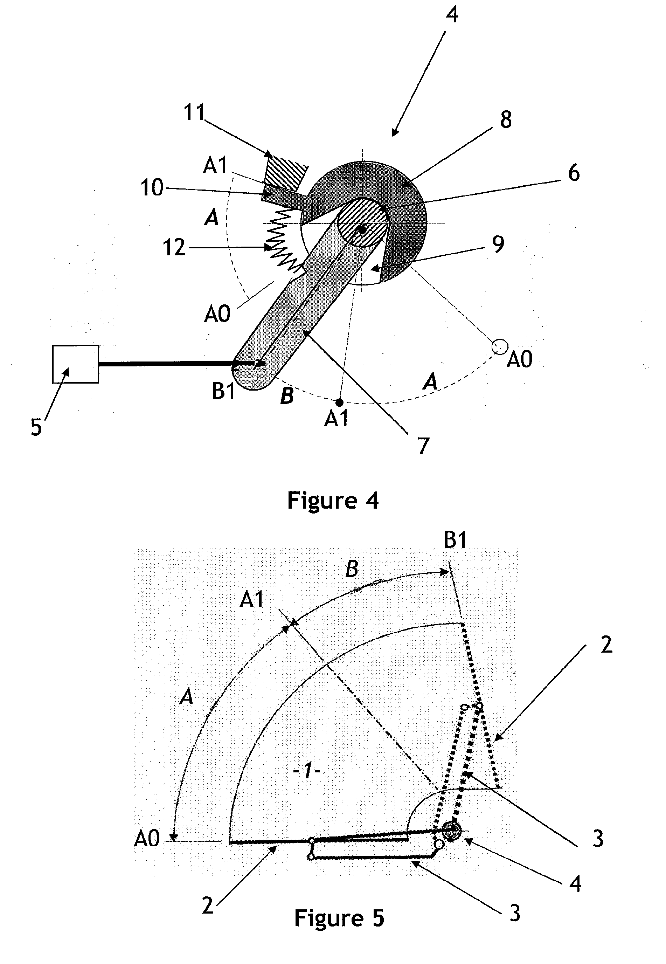

De même, ainsi que le montre la figure 5, l'invention peut également être mise en oeuvre sur un système à parallélogramme, lui-même destiné à optimiser la surface essuyée d'un pare-brise, ainsi qu'à combattre les effets de vrillage de la lame d'essuyage en fonction de la cambrure dudit pare-brise.

## Revendications

1. Essuie-vitre dont un bras (3) est lié à un balai d'essuie-vitre (2) comportant, en particulier, une lame d'essuyage, une extrémité dudit bras d'essuie-vitre (3) étant montée sur une extrémité d'un axe de liaison (6), dans lequel l'extrémité opposée dudit axe de liaison (6) est solidaire d'un levier pivotant (7) lui-même relié à un moteur d'entraînement (5), dans lequel ledit axe de liaison (6) est inséré, de manière à le traverser, dans un manchon creux (8), ledit axe de liaison (6) étant sensiblement incliné par rapport à l'axe de révolution (Z) dudit manchon creux (8) de manière à former avec celui-ci un angle (α) non nul et inférieur à 90°, **caractérisé en ce qu'**il inclut des moyens appropriés aptes à :
- induire le pivotement dudit bras (3) autour de l'axe dudit moteur d'entraînement (5), pour essuyer une première zone (A), d'une cambrure donnée, de ladite surface à essuyer (1), d'une part, et à,
- induire le pivotement dudit bras (3) autour dudit axe de liaison (6) pour essuyer une deuxième zone (B), de cambrure sensiblement différente de ladite cambrure de ladite zone (A), de ladite surface à essuyer (1), d'autre part.

2. Essuie-vitre selon la revendication 1, **caractérisé en ce que** lesdits moyens appropriés comportent un ressort précontraint (12) reliant entre eux ledit axe de liaison (6) et ledit manchon creux (8).

3. Essuie-vitre selon l'une ou l'autre des revendications 1 ou 2, **caractérisé en ce que** lesdits moyens appropriés comportent, à la périphérie dudit manchon creux (8), un appendice (10) destiné à coopérer avec une butée fixe (11) placée à son voisinage.

4. Essuie-vitre selon la revendication 3, **caractérisé en ce que** l'une des extrémités dudit ressort approprié précontraint (12) est liée audit appendice (10) dudit manchon creux (8) et que l'autre extrémité dudit ressort approprié précontraint (12) est liée audit levier pivotant (7).

5. Essuie-vitre selon l'une ou fautre des revendications 3 ou 4, **caractérisé en ce que** le parcours angulaire dudit manchon creux entre sa position initiale de repos et sa position dans laquelle ledit appendice (10) coopère avec ladite butée fixe (11) correspond au débattement angulaire dudit balai d'essuie-vitre (2) entre sa position initiale (A0) et sa position finale (A1) lors de l'essuyage de ladite zone (A) d'une cambrure donnée d'une surface à essuyer (1).

6. Essuie-vitre selon l'une quelconque des revendications 1 à 4, **caractérisé en ce que** lesdits moyens appropriés incluent, sur toute la longueur dudit manchon creux (8), une échancrure appropriée (9) dont l'ouverture angulaire (β) correspond au débattement angulaire dudit balai d'essuie-vitre (2) lors de l'essuyage de ladite deuxième zone (B) de ladite surface à essuyer (1).

7. Essuie-vitre selon l'une quelconque des revendications 5 à 6, **caractérisé en ce que** ledit appendice (10) dudit manchon creux (8) atteint ladite butée fixe (11) lorsque ledit balai d'essuie-vitre (2) atteint la position (A1) de passage entre lesdites zones (A) et (B), de cambrures sensiblement différentes, de ladite zone à essuyer (1).

8. Essuie-vitre selon l'une quelconque des revendications 2 à 7, **caractérisé en ce que** la raideur dudit ressort approprié précontraint (12) est telle que, lors de l'essuyage de ladite zone (A) de ladite surface à essuyer (1), la rotation dudit manchon creux (8) et le mouvement dudit levier pivotant (7) entraînant la rotation dudit axe de liaison (6) et celle dudit bras d'essuie-vitre (3) se font sans déformation dudit ressort approprié précontraint (12).

9. Dispositif d'essuie-vitre comprenant un essuie-vitre selon l'une quelconque des revendications 1 à 8, ledit moteur d'entraînement (5) et un arbre d'entraînement approprié raccordant ledit moteur d'entraînement (5) audit levier pivotant (7).

10. Véhicule automobile équipé d'au moins un essuie-vitre selon l'une quelconque des revendications 1 à 8.
